# EUROPÄISCHE PATENTSCHRIFT

(11) **EP 3 311 967 B1**
(45) Veröffentlichungstag und Bekanntmachung des Hinweises auf die Patenterteilung: **17.08.2022**
(21) Anmeldenummer: 17194866.4
(22) Anmeldetag: 05.10.2017
(51) Int. Cl.: B27M 1/08, B23Q 1/54, B23Q 5/04, B23Q 39/02

(54) **HOLZBEARBEITUNGSVORRICHTUNG**
WOODWORKING DEVICE
DISPOSITIF À TRAVAILLER LE BOIS

(30) Priorität: 06.10.2016 CH 13302016
(43) Veröffentlichungstag der Anmeldung: 25.04.2018
(73) Patentinhaber: Krüsi Maschinenbau AG, 9105 Schönengrund (CH)
(72) Erfinder: Iseli, Urs, 9105 Schönengrund (CH); Büchler, Valentin, 9105 Schönengrund (CH)
(74) Vertreter: Gachnang, Hans Rudolf

(56) Entgegenhaltungen:
- EP-A1- 2 392 440
- WO-A1-2004/080649
- WO-A2-2008/004263
- DE-A1- 4 131 036
- DE-A1- 10 213 778
- US-A- 5 017 063

## Beschreibung

Die Erfindung bezieht sich auf Holzbearbeitungsvorrichtungen nach dem Oberbegriff des Anspruchs 1. Diese Holzbearbeitungsvorrichtungen werden für die mit verschiedenen Werkzeugen durchgeführte Bearbeitung von Holzelementen verwendet und sie umfassen mindestens ein Aggregat mit mindestens einem Wechselfutter für Werkzeuge oder Werkzeughalter. Es werden beispielsweise Werkzeuge zum Sägen, Bohren, Fräsen, Hobeln, Kehlen oder Nuten eingesetzt. Das Aggregat kann ein eingesetztes Werkzeug in eine für die Bearbeitung eines Holzelementes gewünschten Richtung ausrichten und zur Bearbeitung in Drehbewegung versetzten. Damit ein ausgerichtetes Werkzeug und eine zu bearbeitende Stelle eines Holzelementes miteinander in Kontakt gebracht werden können, umfasst die Holzbearbeitungsvorrichtung eine Führungsvorrichtung. Die Führungsvorrichtung umfasst eine Aggregatführung zum Bewegen des Aggregats und/oder eine Elementführung zum Bewegen des Holzelementes.

US 5 017 063, DE 102 13 778 A1 und DE 41 31 036 A1 beschreiben Vorrichtungen für die Metallbearbeitung, bei denen Werkzeuge nicht effizient ausrichtbar sind.

EP 0 267 156 B1, EP 2 353 820 B1 und EP 0 608 746 B1 beschreiben Lösungen, bei denen ein Spindelmotor mit einem Wechselfutter für Werkzeuge relativ zu einem Träger von Drehvorrichtungen um zwei zueinander senkrechte Drehachsen drehbar und der Träger in zwei mit y und z bezeichneten zueinander senkrechten Richtungen verschiebbar gelagert ist. Ein zu bearbeitender Holzbalken ist in einer mit x bezeichneten Richtung positionierbar, wobei diese x-Richtung senkrecht zu der von den y- und z-Richtungen aufgespannten Ebene verläuft. Die Elemente, welche die Bewegungen in den Richtungen x, y und z ermöglichen, bilden gesamthaft eine Führungsvorrichtung, welche den Träger und den zu bearbeitenden Holzbalken in eine gewünschte Relativlage zu bringen vermag. Die möglichen Drehbewegungen sind durch die zum Spindelmotor führenden elektrischen Kabel eingeschränkt. Zudem sind der Aufwand und der Platzbedarf für die Drehausrichtung des Spindelmotors insbesondere bei eingesetzten Werkzeugen unerwünscht gross. Auch die mit Werkzeugwechseln verbundenen Bewegungen des Spindelmotors sind aufwändig und reduzieren die produktive Bearbeitungszeit.

EP 2 392 440 A1, WO 2008/004263 A2 und WO 2004/080649 A1 beschreiben weitere Lösungen, bei denen das Wechselfutter an einer Elektrospindel angeordnet ist.

DE 60 2006 000 545 T2 beschreibt ein Bearbeitungszentrum mit zwei Arbeitseinheiten, die in x-, y- und z-Richtung verschiebbar sind. Jede Arbeitseinheit umfasst einen um eine z-Achse drehbaren Teil, an dem ein Spindelmotor um eine zur z-Achse senkrechte Achse drehbar angeordnet ist. Der Spindelmotor umfasst an beiden Enden der Antriebswelle je eine elektrische Spannvorrichtung. Der für die Bearbeitung nötige Bereich ist sehr gross und entsprechend ist auch der Aufwand für das Abführen von abgetragenen Spänen und das Absaugen von Staub sehr gross. Auch hier sind die Bewegungsmöglichkeiten durch die Kabelführungen zum Spindelmotor eingeschränkt. Zudem ist der Kraftaufwand für schnelle Drehausrichtungen der Spindelmotoren unerwünscht gross.

WO 2008/004263 A2 und WO 2004/080649 A1 beschreiben eine verschiebbare Arbeitseinheit mit einem um eine z-Achse drehbaren Zwischenstück und einem um eine zur z-Achse senkrechte Achse drehbaren Gehäuse mit drei oder mehr Spindelmotoren, die je ein Werkzeug antreiben können. Es können lediglich bolzenförmige Werkzeuge mit dem Gehäuse gedreht werden. Auch hier schränken Kabelführungen zu den Spindelmotoren die Bewegungsmöglichkeiten ein und die für schnelle Ausrichtungsänderungen nötigen Kräfte sowie der Platzbedarf für die Drehausrichtung der Spindelmotoren sind unerwünscht gross.

Die erfindungsgemässe Aufgabe besteht nun darin, eine einfach aufgebaute und effizient arbeitende Holzbearbeitungsvorrichtung zu finden.

Die Aufgabe wird durch die Merkmale des Patentanspruchs 1 gelöst. Die abhängigen Patentansprüche beschreiben alternative bzw. vorteilhafte Ausführungsvarianten, welche weitere Aufgaben lösen.

Eine erfindungsgemässe Holzbearbeitungsvorrichtung für die Bearbeitung von Holzelementen umfasst zumindest ein Aggregat und eine Führungsvorrichtung, wobei die Führungsvorrichtung das mindestens eine Aggregat und ein zu bearbeitendes Holzelement in eine gewünschte Relativlage zu bringen vermag. Das mindestens eine Aggregat umfasst eine Verbindungseinrichtung zur Führungsvorrichtung, beispielsweise eine in y- und z-Richtung verschiebbare Grundplatte, einen Werkzeugkopf mit mindestens einem Wechselfutter für Werkzeuge oder Werkzeughalter und zwischen der Verbindungseinrichtung und dem Werkzeugkopf bei der Verbindungseinrichtung eine erste und beim Werkzeugkopf eine zweite Drehvorrichtung für Drehbewegungen um eine erste bzw. eine zweite Drehachse, wobei die erste und die zweite Drehachse zueinander senkrecht ausgerichtet sind. Es versteht sich von selbst, dass das Aggregat auch Aggregatteile bzw. Gehäuseteile umfasst, an denen Elemente des Aggregats angeordnet sind.

In einem erfinderischen Schritt wurde erkannt, dass es vorteilhaft ist, wenn der Antriebsmotor zum Bereitstellen der Drehbewegung für arbeitende Werkzeuge nicht direkt beim Wechselfutter für die Werkzeuge oder Werkzeughalter angeordnet wird, sondern bei der Verbindungseinrichtung. Dadurch wird es zwar notwendig, dass die Antriebsvorrichtung zum Antreiben des mindestens einen Wechselfutters nebst dem Antriebsmotor, zusätzlich eine Antriebsübertragung vom Antriebsmotor zum mindestens einen Wechselfutter des Werkzeugkopfs umfasst. Damit dies nicht zu Nachteilen sondern zu Vorteilen führt, umfasst die Antriebsübertragung bei der ersten und der zweiten Drehvorrichtung jeweils einen auf der ersten bzw. zweiten Drehachse zentriert angeordneten ersten bzw. zweiten Wellenabschnitt und beim vom Werkzeugkopf abgewandten Bereich des zweiten Wellenabschnitts ein formschlüssiges Getriebe mit Zahnrädern, vorzugsweise mit zwei ineinandergreifenden Kegelrädern.

Mit dieser Antriebsübertragung kann der Werkzeugkopf äusserst klein gebaut werden. In der einfachsten Ausführung der Antriebsübertragung ist der erste Wellenabschnitt über zwei Kegelräder mit dem zweiten Wellenabschnitt verbunden. Bei bevorzugten weiteren Ausführungsformen ist zwischen dem ersten und dem zweiten Wellenabschnitt ein formschlüssiges Getriebe mit weiteren Zahnrädern und gegebenenfalls mindestens einem weiterer Wellenabschnitt eingesetzt. Die Antriebsübertragung über Getriebe mit Zahnrädern und Wellen kann kompakt gebaut werden und sie ist mit einem minimalen Wartungsaufwand verbunden. Die Geometrie bzw. die Relativlage zwischen dem ersten und dem zweiten Wellenabschnitt bzw. zwischen der Verbindungseinrichtung und dem Werkzeugkopf bleibt immer gleich, was mit kleinem Aufwand eine hohe Präzision bei der Bearbeitung von Holzteilen gewährleistet. Wenn die Führungseinrichtung die Verbindungseinrichtung relativ zum Holzelement positioniert hat, so ist die Lage des Werkzeugkopfs genau bestimmt.

Im Werkzeugkopf muss lediglich die über den zweiten Wellenabschnitt eingebrachte Drehbewegung auf mindestens ein Wechselfutter übertragen werden. Vorzugsweise erfolgt diese Übertragung auf eine quer, insbesondere aber senkrecht, zum zweiten Wellenabschnitt ausgerichtete Verbindungswelle zum mindestens einen Wechselfutter, was beispielsweise mit einem Kegelradgetriebe erzielt werden kann. Weil keine elektrischen Leitungen in den Werkzeugkopf bzw. zum Bereich mit dem mindestens einen Wechselfutter geführt werden müssen, können beliebige Drehbewegungen um die erste und die zweite Drehachse ausgeführt werden. Der Werkzeugkopf mit dem mindestens einen Wechselfutter ist am Aggregat uneingeschränkt bewegbar.

Weil der Werkzeugkopf ohne Antriebsmotor sehr klein ausgebildet werden kann, sind die bei Drehungen zu überwindenden Trägheitskräfte sehr klein, was die Beweglichkeit erhöht. Die kleine Bauweise des Werkzeugkopfs ermöglicht auch, dass die Werkzeuge nahe bei der zweiten Drehachse gehalten sind und ihre Ausrichtungs-Bewegungen für jeweilige Bearbeitungen nur einen kleinen Arbeitsraum beanspruchen. Zudem ermöglicht die kleine Ausdehnung des Werkzeugkopfs, dass scheiben- oder zylinderförmige Werkzeuge wie Kreissägeblätter und Hobel-Werkzeuge bereits mit kleinen Radien in einem grossen Bereich Ihres Umfangs über den Werkzeugkopf bzw. über das Aggregat vorstehen. Kreissägeblätter können bereits mit mittleren Durchmessern eine grosse Arbeitstiefe erzielen, weil sie genügend weit über den Werkzeugkopf vorstehen.

Weil im Werkzeugkopf lediglich die Bewegung vom zweiten Wellenabschnitt in dazu quer verlaufende Richtungen übertragen wird, ist es auf kleinstem Raum möglich, mehrere vom zweiten Wellenabschnitt wegführende Wechselfutter anzuordnen. Die Wechselfutter werden vom zweiten Wellenabschnitt über Getriebe angetrieben, wobei die Getriebe vorzugsweise als Kegelradgetriebe ausgebildet sind. Besonders vorteilhaft sind Ausführungen, bei denen in gleichmässigen Umfangsabständen um den zweiten Wellenabschnitt Wechselfutter angeordnet sind, deren Achsen sich senkrecht zum zweiten Wellenabschnitt erstrecken, wobei mindestens zwei, vorzugsweise vier und gegebenenfalls sechs Wechselfutter angeordnet sind. Vorzugsweise wird der Werkzeugkopf quaderförmig, insbesondere im Wesentlichen würfelförmig ausgebildet und umfasst in vier Aussenflächen je ein Wechselfutter. Es wäre aber auch mögliche in sechs gleichmässig um den zweiten Wellenabschnitt verteilten Richtungen je ein Wechselfutter anzuordnen. Selbst ein Wechselfutter in der Verlängerung des zweiten Wellenabschnitts ist möglich. Bei einer Mehrzahl von Wechselfuttern ist immer eine entsprechende Anzahl von Werkzeugen einsatzbereit. Darum kann mit einem erfindungsgemässen Aggregat in vielen Anwendungen auf eine automatische Wechselvorrichtung für Werkzeuge verzichtet werden.

Bei einer bevorzugten Ausführungsform ist zwischen den beiden Drehvorrichtungen ein mittlerer Abschnitt der Antriebsübertragung in einem Abstand zur ersten Drehachse angeordnet und verläuft vorzugsweise parallel zu dieser. Die Antriebsübertragung vom ersten Wellenabschnitt zum mittleren Abschnitt der Antriebsübertragung umfasst eine zur ersten Drehachse radiale Übertragungseinrichtung und das von der radialen Übertragungseinrichtung abgewandte Ende des mittlerer Abschnitts der Antriebsübertragung steht in Antriebsverbindung zum zweiten Wellenabschnitt.

Bei einer solchen Ausführungsform kann das Aggregat so ausgebildet werden, dass der Werkzeugkopf und damit das mindestens eine Wechselfutter im Bereich der ersten Drehachse liegt und sich die Werkzeuge bei um die zweite Achse drehendem Werkzeugkopf nur innerhalb eines minimalen Bereichs bewegen. Entsprechend klein sind der benötigte Arbeitsbereich und die darin anzuordnenden Sammel- und Abführvorrichtungen für vom Holzelement abgetrennte Teile.

In einer weiter bevorzugten Ausführungsform umfasst die radiale Übertragungseinrichtung eine Getriebe-Übertragung mit in Serie angeordneten Zahnrädern, von denen jeweils direkt benachbarte ineinander eingreifen, mit mindestens zwei vorzugsweise aber mit vier Zahnrädern. Es ist auch möglich, dass die radiale Übertragungseinrichtung einen Wellenabschnitt umfasst. Die gewählte radiale Übertragungseinrichtung ist über passende Zahnräder, insbesondere Kegelräder, einerseits mit dem ersten Wellenabschnitt und andererseits mit dem mittleren Abschnitt der Antriebsübertragung verbunden.

Der mittlere Abschnitt der Antriebsübertragung kann einen mittleren Wellenabschnitt oder insbesondere eine Getriebe-Übertragung mit in Serie angeordneten Zahnrädern, von denen jeweils direkt benachbarte ineinander eingreifen, umfassen, wobei ein mittlerer Wellenabschnitt aufgrund der benötigten Länge bevorzugt ist.

In einer weiteren bevorzugten Ausführungsform liegt eine vom zweiten Wellenabschnitt abgewandte freie Stirnfläche des Werkzeugkopfs in einem Abstand von mindestens 50 cm zum mittleren Abschnitt der Antriebsübertragung. Dadurch kann im Bereich eines in den Werkzeugkopf eingesetzten Werkzeugs rund um das mindestens eine Wechselfutter ein grosser Abstand zu den Teilen des Aggregats bereitgestellt werden. Entsprechend können alle Werkzeuge, die sich radial weniger weit ausdehnen als dieser Abstand, am Werkzeugkopf rund um die zweite Drehachse gedreht werden.

Es ist vorteilhaft, wenn der Bereich des zweiten Wellenabschnitts, in dem die Wechselfutter um diesen angeordnet sind, bei der ersten Drehachse angeordnet ist, weil sich dadurch die Werkzeuge aller Wechselfutter lediglich innerhalb eines minimalen Bereichs bewegen.

Ein vorteilhaftes Aggregat erzielt die Drehungen des Werkzeugkopfs um zwei zueinander senkrechte Achsen mit zwei Drehvorrichtungen. Die erste Drehvorrichtung umfasst eine zwischen dem Verbindungsteil und einem mittleren Aggregatabschnitt angeordnete erste Drehlagerung und einen am Verbindungsteil angeordneten ersten Drehantrieb. Die zweite Drehvorrichtung umfasst eine zwischen dem mittleren Aggregatabschnitt und dem Werkzeugkopf angeordnete zweite Drehlagerung und einen am mittleren Aggregatabschnitt angeordneten zweiten Drehantrieb. Der erste und der zweite Drehantrieb machen je über diesen zugeordnete erste bzw. zweite Ausrichtungsübertragungen die gewünschten relativen Ausrichtungen der beidseits der jeweiligen Drehlagerungen angeordneten Teile einstellbar. Durch die Verwendung von Servomotoren können die Drehausrichtungen nummerisch kontrolliert werden (NC-Achsen).

In einer bevorzugten Ausführungsform ist die erste Ausrichtungsübertragung als Getriebe, insbesondere als Schneckengetriebe ausgebildet, wobei die Schnecke am ersten Drehantrieb angeordnet ist und das Schneckenrad am ersten Wellenabschnitt. Damit kann immer eine präzise Drehausrichtung gewährleistet werden.

In einer bevorzugten Ausführungsform ist der zweite Drehantrieb in der der ersten Drehlagerung zugewandten Hälfte des mittleren Aggregatabschnitts angeordnet, vorzugsweise in einem Bereich mit der ersten Drehachse, so dass die für das Drehen nötigen Drehmomente möglichst klein sind. Die zweite Ausrichtungsübertragung erstreckt sich vom zweiten Drehantrieb über mindestens die halbe Länge des mittleren Aggregatabschnitts bis zum Bereich mit der zweiten Drehlagerung und ist vorzugsweise als Getriebe, insbesondere mit mindestens drei, vorzugsweise aber mit fünf Zahnrädern ausgebildet. Um immer eine präzise Drehausrichtung zu gewährleisten sind die Eingriffe zwischen den Zahnrädern schlupffrei einstellbar. Gegebenenfalls umfasst die zweite Ausrichtungsübertragung mindestens eine Welle und mindestens ein Kegelradgetriebe.

Der Abstand zwischen dem zweiten Drehantrieb und dem Werkzeugkopf schliesst störende Wirkungen des Werkzeugkopfs auf Sensorelemente und Elektronikelemente des vorzugsweise als Servomotor ausgebildeten zweiten Drehantriebs im Wesentlichen aus. Das heisst beispielsweise, dass sich die beim Werkzeugkopf aufgrund des Getriebes entstehende Wärme nicht störend auf die Einsatzbereitschaft und den nötigen Unterhalt des zweiten Drehantriebs auswirkt.

In einer bevorzugten Ausführungsform ergibt sich zwischen dem zweiten Drehantrieb und dem Werkzeugkopf bei einem zur ersten Drehachse seitlich versetzten mittleren Abschnitt der Antriebsübertragung im Bereich der ersten Drehachse ein Freiraum. Dieser Freiraum wird in der Richtung der ersten Drehachse und von dieser zum mittleren Aggregatabschnitt so dimensioniert, dass zumindest ein Teil der gängigen Werkzeuge eingesetzt in einem Wechselfutter mit dem Werkzeugkopf rund um die zweite Drehachse drehbar sind.

Die beschriebenen Aggregate können in Verbindung mit bekannten Führungsvorrichtungen eingesetzt werden und dabei entstehen erfindungsgemässe Holzbearbeitungsvorrichtungen.

Bei einer bevorzugten Ausführungsform umfasst die Führungsvorrichtung mindestens eine y-z-Führung für mindestens eine Verbindungseinrichtung und eine x-Führung für ein zu bearbeitendes Holzelement. Die mindestens eine Verbindungseinrichtung ist an einer in y-Richtung ausgerichteten ersten Schiene der mindestens einen y-z-Führung verfahrbar. Die erste Schiene ist an zwei in z-Richtung ausgerichteten zweiten Schienen verfahrbar. Die erste Drehachse des mindestens einen Aggregates ist in z-Richtung ausgerichtet und das Holzelement ist von der x-Führung senkrecht zu der von der y-z-Führung festgelegten Ebene positionierbar.

Besonders vielfältig einsetzbar ist eine Holzbearbeitungsvorrichtung, bei welcher die Führungsvorrichtung zwei y-z-Führungen umfasst, von denen die in y-Richtung ausgerichteten ersten Schienen vertikal versetzt an den gemeinsamen zweiten Schienen angeordnet sind, so dass an einer oberen und einer unteren ersten Schiene je mindestens eine Verbindungseinrichtung und mit dieser jeweils ein Aggregat verfahrbar ist. Die Aggregate an der oberen ersten Schiene sind mit nach unten vorstehenden Werkzeugköpfen und die Aggregate an der unteren ersten Schiene mit nach oben vorstehenden Werkzeugköpfen angeordnet. Dadurch wird eine vielfältige Bearbeitung des Holzelementes von unten und oben bzw. von allen Seiten möglich.

Bei einer bevorzugten Ausführungsform sind mindestens vier vorzugsweise mindestens fünf Aggregate an der Führungsvorrichtung angeordnet, wobei jedes Aggregat mindestens zwei, vorzugsweise vier Wechselfutter umfasst, so dass jederzeit mindestens acht, vorzugsweise aber zwanzig Werkzeuge einsatzbereit sind.

Die Zeichnungen erläutern die Erfindung anhand eines Ausführungsbeispiels, auf das sie aber nicht eingeschränkt ist. Dabei zeigen
- Fig. 1: eine perspektivische Darstellung einer Holzbearbeitungsvorrichtung,
- Fig. 2: eine Seitenansicht des Bearbeitungsbereichs der Holzbearbeitungsvorrichtung der Fig. 1,
- Fig. 3: eine Ansicht auf die Rückseite des Bearbeitungsbereichs der Holzbearbeitungsvorrichtung der Fig. 1,
- Fig. 4: eine Seitenansicht eines Aggregats,
- Fig. 5: eine Ansicht auf die Rückseite des Aggregats der Fig. 4, und
- Fig. 6: einen Schnitt durch das Aggregat in der Ausrichtung gemäss Fig. 5.

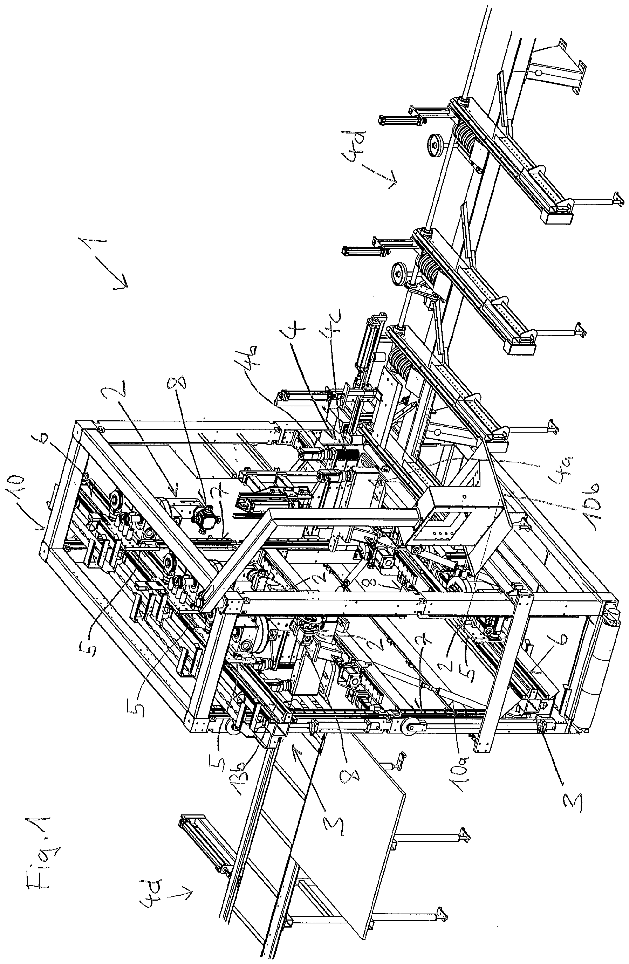

Fig. 1 bis 3 zeigen eine Ausführungsform einer Holzbearbeitungsvorrichtung 1 für die Bearbeitung von Holzelementen mit mehreren Aggregaten 2 und mit einer Führungsvorrichtung, welche die Aggregate 2 und ein nicht dargestelltes zu bearbeitendes Holzelement in eine gewünschte Relativlage zu bringen vermag. Die Führungsvorrichtung umfasst zwei y-z-Führungen 3 für Aggregate 2 und eine x-Führung 4 für ein zu bearbeitendes Holzelement. Jedes Aggregat 2 umfasst eine Verbindungseinrichtung 5, welche an einer in y-Richtung ausgerichteten ersten Schiene 6 verfahrbar ist. In der dargestellten Ausführungsform sind eine obere und eine untere erste Schiene 6 an zwei in z-Richtung ausgerichteten zweiten Schienen 7 verfahrbar, wobei je zwei z-Antriebe 6a für die exakte Positionierung eingesetzt sind. In der dargestellten Ausführungsform sind die z-Antriebe 6a je an den ersten Schienen 6 befestigt und greifen über Zahnräder in entlang der zweiten Schienen 7 angeordnete Zahnstangen ein. Holzelemente sind von der x-Führung 4 senkrecht zu der von den y-z-Führungen 3 festgelegten Ebene positionierbar.

Die Aggregate 2 an der oberen ersten Schiene 6 sind mit nach unten vorstehenden Werkzeugköpfen 8 und die Aggregate 2 an der unteren ersten Schiene 6 mit nach oben vorstehenden Werkzeugköpfen 8 angeordnet, so dass die Bearbeitung eines Holzelementes von unten und oben bzw. von allen Seiten möglich ist. Bei der dargestellten Ausführungsform sind fünf Aggregate 2 an der Führungsvorrichtung angeordnet, nämlich drei an der oberen ersten Schiene 6 und zwei an der unteren ersten Schiene 6. Das für eine Bearbeitung benötigte Aggregat 2 wird entlang der ersten Schiene 6 zum zu bearbeitenden Holzelement geführt, wobei nicht benötigte aber an der gleichen ersten Schiene 6 angeordnete Aggregate 2 vom benötigten Aggregat 2 und vom Holzelement weg bewegt werden. Die Anzahl der an der jeweiligen ersten Schiene 6 angeordneten Aggregate 2 hängt davon ab, welche Bearbeitungen durchgeführt werden sollen bzw. wie viele Werkzeuge schnell einsetzbar sein sollen. Damit für die nicht benötigten Aggregate 2 genügend Platz vorhanden ist, ist die obere erste Schiene 6 für drei Aggregate 2 etwas länger ausgebildet als die untere erste Schiene 6 für zwei Aggregate. Wenn jedes Aggregat mindestens zwei, vorzugsweise aber vier, Wechselfutter 12 umfasst, so sind bei beispielsweise vier Aggregaten 2 jederzeit mindestens acht und bei fünf Aggregaten 2 maximal zwanzig Werkzeuge 11 einsatzbereit.

Die x-Führung 4 für ein zu bearbeitendes Holzelement umfasst zumindest auf beiden Seiten des Arbeitsbereichs 9 Führungselemente 4a und z-Antriebe 4b, welche über reibungsschlüssige von zwei Seiten an das Holzelement anpressbare Mitnahmewalzen 4c das Holzelement positionieren. Anpressbare Führungselemente 4a und gegebenenfalls auch angetriebene Mitnahmewalzen 4c sind gegebenenfalls auch über und insbesondere unter dem Holzelement angeordnet. Um lange Holzelemente zuführen zu können, ist auf der Zuführseite eine lange Auflagevorrichtung 4d ausgebildet. Damit die bearbeiteten langen Holzelemente aus dem Arbeitsbereich 9 entnommen werden können, ist auf der Austrittsseite ebenfalls eine lange Auflagevorrichtung 4d angeordnet. Weil der Arbeitsbereich 9 sehr schmal ist, können auch kurze Holzelemente bearbeitet werden. Es genügt für die Bearbeitung, wenn die Holzelemente auf zumindest einer Seite des Arbeitsbereichs 9, also auf der Zuführseite und/oder auf der Austrittsseite von der x-Führung 4 gehalten und positioniert werden kann.

Damit die Holzbearbeitungsvorrichtung 1 eine hohe Stabilität erhält, sind die zweiten Schienen 7 als Teile eines Rahmens 10 ausgebildet, wobei der Rahmen 10 Träger aufweist, die sich entlang der Seiten eines Quaders erstrecken. Der Rahmen 10 wird durch schief zu den Rahmenteilen verlaufende Stabilisierungselemente 10a zusätzlich stabilisiert. Für die Aufnahme einer Bedienung der Holzbearbeitungsvorrichtung 1 ist ein Gehäuse 10b dreh- und schwenkbar am Rahmen 10 angeordnet.

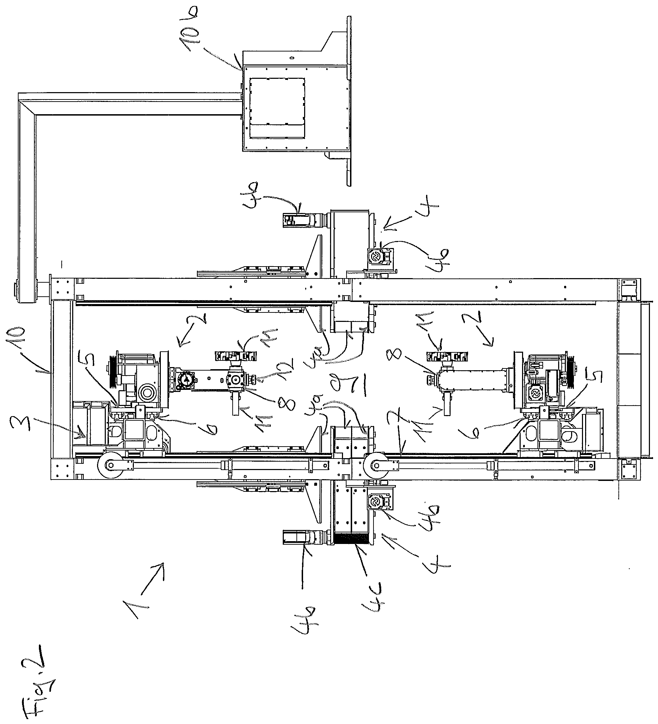

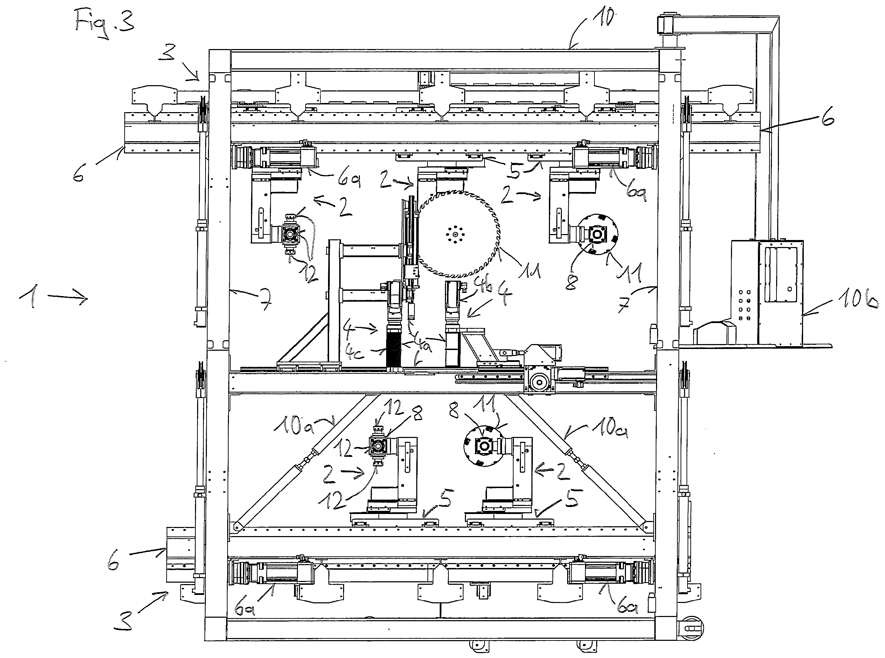

In Fig. 3 sind beispielhaft Werkzeuge 11 in der Form eines Kreissägeblatts und von Hobeln in Wechselfutter 12 der Werkzeugköpfe 8 eingesetzt dargestellt und in Fig. 2 auch Fräswerkzeuge.

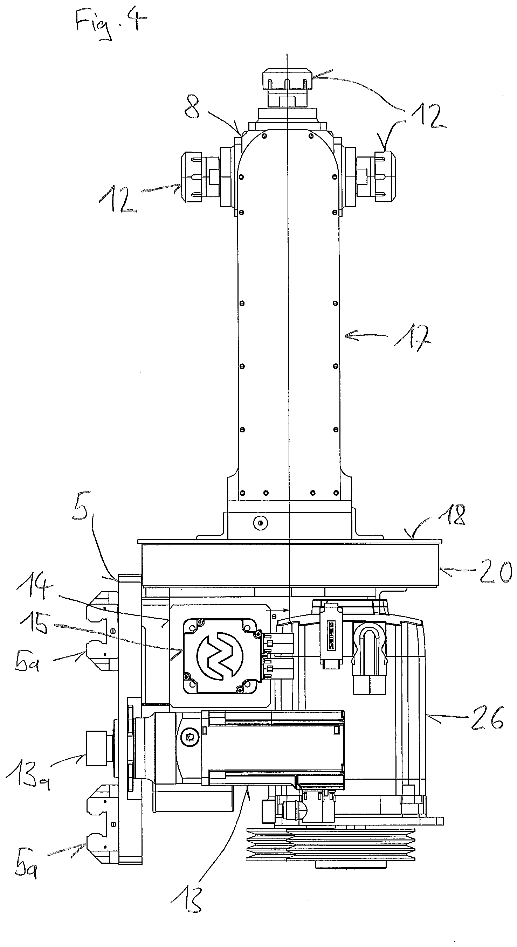

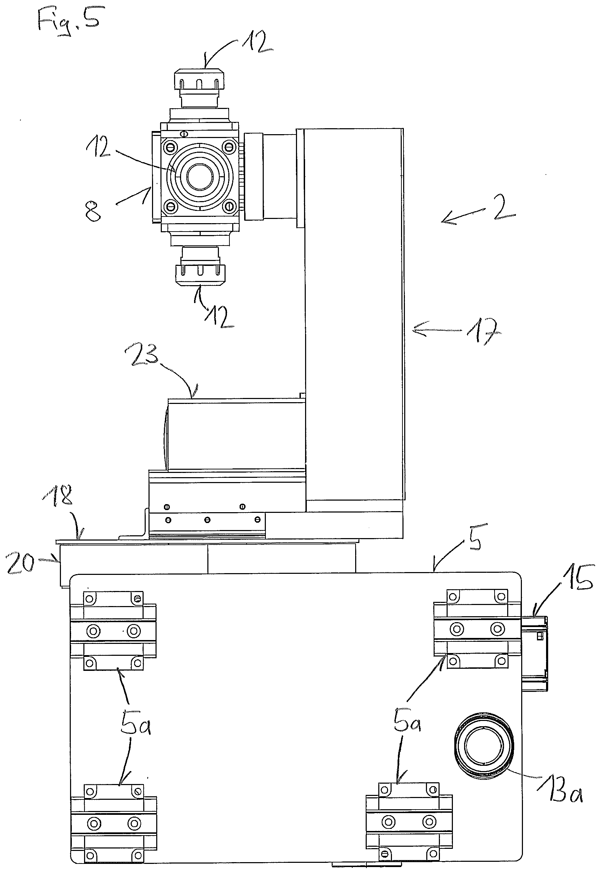

Fig. 4 bis 6 zeigen ein Aggregat 2 aus zwei verschiedenen Richtungen und im Schnitt. Das Aggregat 2 umfasst eine plattenförmige Verbindungseinrichtung 5 zur Führungsvorrichtung. Die Verbindungseinrichtung 5 weist vier Führungselemente 5a auf, welche mit entsprechenden Schienenelementen der ersten Schienen 6 zusammenwirken. Zur exakten Positionierung des Aggregats 2 auf einer ersten Schiene 6 ist ein y-Antrieb 13 an der Verbindungseinrichtung 5 befestigt, der über ein Zahnrad 13a in eine entlang der ersten Schiene 6 angeordnete Zahnstangen 13b eingreift.

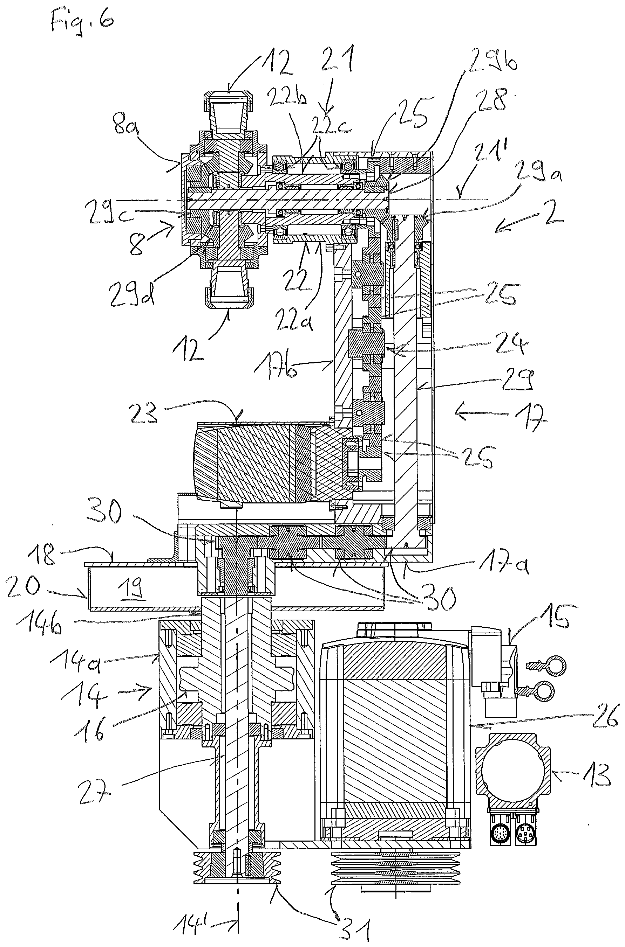

An dem von der Verbindungseinrichtung 5 abgelegenen Ende des Aggregats 2 ist der Werkzeugkopf 8 mit vier Wechselfuttern 12 für Werkzeuge oder Werkzeughalter angeordnet. Zwischen der Verbindungseinrichtung 5 und dem Werkzeugkopf 8 ist direkt bei der Verbindungseinrichtung 5 eine erste Drehvorrichtung 14 für Drehbewegungen um eine erste Drehachse 14' angeordnet. Die erste Drehvorrichtung 14 umfasst eine an der Verbindungseinrichtung 5 befestigte erste Drehlagerung 14a, in welcher ein erstes Drehelement 14b drehbar gelagert ist. Um das erste Drehelement 14b in einer exakten Drehausrichtung positionieren zu können, ist an der Verbindungseinrichtung 5 ein erster Drehantrieb 15 angeordnet, der über eine erste Ausrichtungsübertragung das erste Drehelement 14b drehen kann. Die erste Ausrichtungsübertragung ist als Getriebe, vorzugsweise als Schneckengetriebe ausgebildet. Dabei ist die nicht dargestellte Schnecke am ersten Drehantrieb 15 angeordnet und diese wirkt mit dem am ersten Drehelement 14b angeordneten Schneckenrad 16 (vgl. Fig. 6) zusammen.

Das erste Drehelement 14b ist fest mit einem mittleren Aggregatabschnitt 17 verbunden. Der mittlere Aggregatabschnitt 17 ist aus mehreren Elementen aufgebaut und umfasst dabei einen scheibenförmigen Abschluss 18 eines Aufnahmebereiches 19 für Kabel. Ein topfförmiger Abschluss 20 des Aufnahmebereiches 19 ist mit der Verbindungseinrichtung 5 verbunden, so dass Kabel von der Verbindungseinrichtung 5 durch den topfförmigen Abschluss 20 in den Aufnahmebereich 19 geführt und im topfförmigen Abschluss mit genügender Länge für Drehbewegungen aufgenommen werden, um anschliessend durch den drehenden scheibenförmigen Abschluss 18 in den mittleren Aggregatabschnitt 17 geführt zu werden.

In der dargestellten Ausführungsform ist der Werkzeugkopf 8 im Wesentlichen im Bereich der ersten Drehachse 14' angeordnet und die Wechselfutter 12 können gegen die erste Drehlagerung 14a ausgerichtet werden. Entsprechend erstreckt sich der mittlere Aggregatabschnitt 17 mit einem Radialgehäuse 17a von der ersten Drehachse 14' weg und führt anschliessend in einem Abstand zur ersten Drehachse 14' mit einem Längsgehäuse 17b parallel zur ersten Drehachse 14' gegen das Ende des Aggregats 2 mit dem Werkzeugkopf 8.

Am Längsgehäuse 17b ist eine zweite Drehvorrichtung 21 zwischen dem mittleren Aggregatabschnitt 17 und dem Werkzeugkopf 8 angeordnet, welche eine zweite Drehlagerung 22 und einen am mittleren Aggregatabschnitt 17 angeordneten zweiten Drehantrieb 23 umfasst. Die zweite Drehlagerung 22 umfasst einen äusseren Hülsenteil 22a des mittleren Aggregatabschnitts 17, an dem über Kugellager 22c ein innerer Hülsenteil 22b des Werkzeugkopfs 8 gelagert ist. Der innere Hülsenteil 22b ist fest mit dem Kopfgehäuse 8a des Werkzeugkopfs 8 verbunden. Der zweite Drehantrieb 23 macht eine Drehausrichtungen des Werkzeugkopfs 8 relativ zum mittleren Aggregatabschnitt 17 um eine zur ersten Drehachse 14' senkrecht ausgerichtete zweite Drehachse 21' einstellbar. Der Drehantrieb 23 ist dabei über eine zugeordnete zweite Ausrichtungsübertragung 24 mit der zweiten Drehlagerung 22 verbunden.

Der zweite Drehantrieb 23 ist in der der ersten Drehlagerung 14a zugewandten Hälfte des mittleren Aggregatabschnitts 17 angeordnet, insbesondere in einem Bereich mit der ersten Drehachse 14', so dass die für das Drehen nötigen Drehmomente möglichst klein sind. Die zweite Ausrichtungsübertragung erstreckt sich vom zweiten Drehantrieb 23 über mehr als die halbe Länge des mittleren Aggregatabschnitts 17 bis zum Bereich mit der zweiten Drehlagerung 22 und ist als formschlüssiges Getriebe mit fünf Ausrichtungszahnrädern 25 ausgebildet, wobei ein erstes Ausrichtungszahnrad 25 auf der Welle des Drehantriebs 23 und ein letztes Ausrichtungszahnrad 25 am innerer Hülsenteil 22b des Werkzeugkopfs 8 angeordnet ist. Um immer eine präzise Drehausrichtung zu gewährleisten sind die Eingriffe zwischen den Zahnrädern 25 schlupffrei einstellbar, vorzugsweise durch eine minimale aneinander angepasste konische Ausgestaltung der Ausrichtungszahnräder 25, so dass jeweils zwischen zwei fix montierten Ausrichtungszahnräder 25 ein Ausrichtungszahnrad 25 mit Stellschrauben in die schlupffreie Eingriffslage gebracht werden kann.

Ein Antriebsmotor 26 zum Bereitstellen der Drehbewegung für arbeitende Werkzeuge ist an der Verbindungseinrichtung 5 angeordnet und über eine Antriebsübertragung mit den Wechselfuttern 12 des Werkzeugkopfs 8 verbunden. Die Antriebsübertragung umfasst bei der ersten und der zweiten Drehvorrichtung 14, 21 jeweils einen auf der ersten bzw. zweiten Drehachse 14', 21' zentriert angeordneten ersten bzw. zweiten Wellenabschnitt 27, 28. Im vom Werkzeugkopf 8 abgewandten Bereich des zweiten Wellenabschnitts 28 ist ein Getriebe mit Zahnrädern, vorzugsweise mit zwei ineinandergreifenden Kegelrädern 29a und 29b angeordnet, wobei das zweite Kegelrad 29b auf dem zweiten Wellenabschnitt 28 sitzt. Das erste Kegelrad 29a sitzt auf einem zum zweiten Wellenabschnitt 28 senkrecht stehenden Wellenabschnitt. Bei einer einfachen Ausführungsform kann dies der erste Wellenabschnitt 27 sein. In der dargestellten Ausführungsform umfasst die Antriebsübertragung einen radial zur ersten Drehachse 14' versetzt angeordneten, mittleren Wellenabschnitt 29 mit dem Kegelrad 29b.

Im Werkzeugkopf 8 wird die über den zweiten Wellenabschnitt 28 eingebrachte Drehbewegung auf die Wechselfutter 12 übertragen. Dazu ist im Kopfgehäuse 8a ein Getriebe mit Kegelrädern eingesetzt. Ein drittes Kegelrad 29c ist auf der zweiten Welle befestigt und greift in vier vierte Kegelräder 29d ein, welche je an einem Wechselfutter 12 befestigt sind. Mit dieser Antriebsübertragung kann der Werkzeugkopf 8 beliebig um die zweite Drehachse gedreht werden und die dabei vom Werkzeugkopf 8 herrührenden zu überwindenden Trägheitskräfte sind aufgrund der kleinen Bauweise des Werkzeugkopfs 8 sehr klein. Die kleine Bauweise des Werkzeugkopfs 8 ermöglicht auch, dass eingesetzte Werkzeuge nahe bei der zweiten Drehachse gehalten sind und ihre Ausrichtungs-Bewegungen für jeweilige Bearbeitungen nur einen kleinen Arbeitsraum beanspruchen. Zudem ermöglicht die kleine Ausdehnung des Werkzeugkopfs, dass scheiben- oder zylinderförmige Werkzeuge wie Kreissägeblätter und Hobel-Werkzeuge bereits mit kleinen Radien in einem grossen Bereich Ihres Umfangs über den Werkzeugkopf vorstehen. Kreissägeblätter können bereits mit mittleren Durchmessern eine grosse Arbeitstiefe erzielen, weil sie genügend weit über den Werkzeugkopf vorstehen.

Bei der dargestellten Ausführungsform ist zwischen den beiden Drehvorrichtungen 14, 21 ein mittlerer Abschnitt der Antriebsübertragung mit dem mittleren Wellenabschnitt 29 in einem Abstand zur ersten Drehachse 14' angeordnet und verläuft parallel zu dieser. Die Antriebsübertragung vom ersten Wellenabschnitt 27 zum mittleren Wellenabschnitt 29 umfasst eine zur ersten Drehachse 14' radiale Übertragungseinrichtung in der Form einer Getriebe-Übertragung mit vorzugsweise vier Zahnrädern 30, von denen jeweils direkt benachbarte ineinander eingreifen und ein erstes Zahnrad 30 am ersten Wellenabschnitt 27 und ein letztes Zahnrad 30 am mittleren Wellenabschnitt 29 angeordnet ist. Es wäre auch möglich, dass die radiale Übertragungseinrichtung mit einem Wellenabschnitt aufgebaut wird, wobei eine solche Lösung aufgrund der für die Anschlüsse an den ersten und den mittleren Wellenabschnitt 27, 29 benötigten Kegelräder in Richtung der ersten Drehachse 14' etwas mehr Platz braucht.

In der dargestellten Ausführungsform liegt eine vom zweiten Wellenabschnitt 28 abgewandte freie Stirnfläche des Werkzeugkopfs 8 in einem Abstand von mindestens 50 cm zum mittleren Wellenabschnitt 29, bzw. zum Längsgehäuse 17b, in dem der mittlere Wellenabschnitt 29 aufgenommen ist. Dadurch kann im Bereich eines in den Werkzeugkopf 8 eingesetzten Werkzeugs 11 rund um das mindestens eine Wechselfutter 12 ein grosser Abstand zu den Teilen des Aggregats 2 bereitgestellt werden. Entsprechend können alle Werkzeuge 11, die sich radial weniger weit ausdehnen als dieser Abstand, am Werkzeugkopf 8 rund um die zweite Drehachse 21' gedreht werden.

Am vom Werkzeugkopf 8 abgewandten Ende des ersten Wellenabschnitts 27 könnte direkt die Welle des Antriebsmotors 26 anschliessen, gegebenenfalls über ein Getriebe mit Zahnrädern. In der dargestellten Ausführungsform ist der Antriebsmotor neben dem ersten Wellenabschnitt 27 angeordnet, wobei die Welle des Antriebsmotors 26 parallel zum ersten Wellenabschnitt 27 verläuft und an beiden Wellen einander zugeordnete Keilriemenscheiben 31 angeordnet sind. Um die Keilriemen auf diesen Keilriemenscheiben 31 spannen zu können, ist der Antriebsmotors 26 senkrecht zur ersten Drehachse 14' verstellbar an der Verbindungseinrichtung 5 befestigt.

## Patentansprüche

1. Holzbearbeitungsvorrichtung (1) für die Bearbeitung von Holzelementen mit zumindest einem Aggregat (2) und einer Führungsvorrichtung, welche Führungsvorrichtung das mindestens eine Aggregat (2) und ein zu bearbeitendes Holzelement in eine gewünschte Relativlage zu bringen vermag, wobei das mindestens eine Aggregat (2) eine Verbindungseinrichtung (5) zur Führungsvorrichtung, einen Werkzeugkopf (8) mit mindestens einem Wechselfutter (12) für Werkzeuge (11) oder Werkzeughalter, eine Antriebsvorrichtung zum Antreiben des mindestens einen Wechselfutters (12) und zwischen der Verbindungseinrichtung (5) und dem Werkzeugkopf (8) bei der Verbindungseinrichtung (5) eine erste und beim Werkzeugkopf (8) eine zweite Drehvorrichtung (14, 21) für Drehbewegungen um eine erste bzw. eine zweite Drehachse (14', 21') umfasst, wobei die erste und die zweite Drehachse (14', 21') zueinander senkrecht ausgerichtet sind, die erste Drehvorrichtung (14) einen ersten Drehantrieb (15) umfasst, die zweite Drehvorrichtung (21) einen zweiten Drehantrieb (23) umfasst und die beiden Drehvorrichtungen (14, 21) Drehungen des Werkzeugkopfes (8) um zwei zueinander senkrechte Achsen erzielbar machen, **dadurch gekennzeichnet, dass** die Antriebsvorrichtung einen an der Verbindungseinrichtung (5) angeordneten Antriebsmotor (26) und eine Antriebsübertragung vom Antriebsmotor (26) zum mindestens einen Wechselfutter (12) des Werkzeugkopfs (8) umfasst, wobei die Antriebsübertragung bei der ersten und der zweiten Drehvorrichtung (14, 21) jeweils einen auf der ersten bzw. zweiten Drehachse (14', 21') zentriert angeordneten ersten bzw. zweiten Wellenabschnitt (27, 28) und beim vom Werkzeugkopf (8) abgewandten Ende des zweiten Wellenabschnitts (28) ein Getriebe mit Zahnrädern, vorzugsweise mit zwei ineinandergreifenden Kegelrädern (29a, 29b), umfasst.

2. Holzbearbeitungsvorrichtung (1) nach Anspruch 1, **dadurch gekennzeichnet, dass** zwischen den beiden Drehvorrichtungen (14, 21) ein mittlerer Abschnitt der Antriebsübertragung in einem Abstand zur ersten Drehachse (14'), vorzugsweise parallel zu dieser verlaufend, angeordnet ist, wobei die Antriebsübertragung vom ersten Wellenabschnitt (27) zum mittleren Abschnitt der Antriebsübertragung eine zur ersten Drehachse (14') radiale Übertragungseinrichtung umfasst.

3. Holzbearbeitungsvorrichtung (1) nach Anspruch 2, **dadurch gekennzeichnet, dass** die radiale Übertragungseinrichtung eine Getriebe-Übertragung mit mindestens zwei insbesondere aber mit vier in Serie angeordneten Zahnrädern (30) oder gegebenenfalls einen beidseits über Zahnräder angeschlossenen radialen Wellenabschnitt umfasst.

4. Holzbearbeitungsvorrichtung (1) nach Anspruch 2 oder 3, **dadurch gekennzeichnet, dass** der mittlere Abschnitt der Antriebsübertragung einen mittleren Wellenabschnitt (29) oder gegebenenfalls ein Getriebe mit in Serie angeordneten Zahnrädern umfasst.

5. Holzbearbeitungsvorrichtung (1) nach einem der Ansprüche 2 bis 4, **dadurch gekennzeichnet, dass** eine vom zweiten Wellenabschnitt (28) abgewandte freie Stirnfläche des Werkzeugkopfs (8) in einem Abstand von mindestens 50 cm zum mittleren Abschnitt der Antriebsübertragung liegt.

6. Holzbearbeitungsvorrichtung (1) nach einem der Ansprüche 1 bis 5, **dadurch gekennzeichnet, dass** der zweite Wellenabschnitt (28) über mindestens ein Getriebe mindestens ein Wechselfutter (12) antreibt, wobei das mindestens eine Getriebe vorzugsweise als Kegelradgetriebe (29c, 29d) ausgebildet ist.

7. Holzbearbeitungsvorrichtung (1) nach Anspruch 6, **dadurch gekennzeichnet, dass** in gleichmässigen Umfangsabständen um den zweiten Wellenabschnitt (28) Wechselfutter (12) angeordnet sind, deren Achsen sich vorzugsweise senkrecht zum zweiten Wellenabschnitt (28) erstrecken, wobei mindestens zwei, vorzugsweise vier und gegebenenfalls sechs Wechselfutter (12) angeordnet sind.

8. Holzbearbeitungsvorrichtung (1) nach Anspruch 7, **dadurch gekennzeichnet, dass** der Bereich des zweiten Wellenabschnitts (28), in dem die Wechselfutter (12) um diesen angeordnet sind, im Bereich der ersten Drehachse (14') angeordnet ist.

9. Holzbearbeitungsvorrichtung (1) nach einem der Ansprüche 1 bis 8, **dadurch gekennzeichnet, dass** die erste Drehvorrichtung (14) eine zwischen dem Verbindungsteil (5) und einem mittleren Aggregatabschnitt (17) angeordnete erste Drehlagerung (14a) und einen am Verbindungsteil (5) angeordneten ersten Drehantrieb (15) umfasst, sowie die zweite Drehvorrichtung (21) eine zwischen dem mittleren Aggregatabschnitt (17) und dem Werkzeugkopf (8) angeordnete zweite Drehlagerung (22) und einen am mittleren Aggregatabschnitt (17) angeordneten zweiten Drehantrieb (23) umfasst, wobei der erste und der zweite Drehantrieb (15, 23) je über eine zugeordnete erste bzw. zweite Ausrichtungsübertragung die gewünschten relativen Ausrichtungen der beidseits der jeweiligen Drehlagerungen (14a, 22) angeordneten Teile einstellbar machen.

10. Holzbearbeitungsvorrichtung (1) nach Anspruch 9, **dadurch gekennzeichnet, dass** der erste Drehantrieb (15) in der Verbindungseinrichtung (5) angeordnet und die erste Ausrichtungsübertragung als Getriebe ausgebildet ist, vorzugsweise als Schneckengetriebe, wobei die Schnecke am ersten Drehantrieb und das Schneckenrad am ersten Wellenabschnitt angeordnet ist.

11. Holzbearbeitungsvorrichtung (1) nach Anspruch 9 oder 10, **dadurch gekennzeichnet, dass** der zweite Drehantrieb (23) in der der ersten Drehlagerung (14a) zugewandten Hälfte des mittleren Aggregatabschnitts (17), vorzugsweise in einem Bereich mit der ersten Drehachse (14'), angeordnet ist, sich die zweite Ausrichtungsübertragung über mindestens die halbe Länge des mittleren Aggregatabschnitts (17) erstreckt und als formschlüssiges Getriebe vorzugsweise mit mindestens drei, insbesondere aber mit fünf Ausrichtungszahnrädern (25) ausgebildet ist, wobei die Eingriffe zwischen den Ausrichtungszahnrädern (25) schlupffrei einstellbar sind.

12. Holzbearbeitungsvorrichtung (1) nach einem der Ansprüche 1 bis 11, **dadurch gekennzeichnet, dass** die Führungsvorrichtung mindestens eine y-z-Führung (3) für mindestens eine Verbindungseinrichtung (5) und eine x-Führung (4) für ein zu bearbeitendes Holzelement umfasst, wobei die mindestens eine Verbindungseinrichtung (5) an einer in y-Richtung ausgerichteten ersten Schiene (6) der mindestens einen y-z-Führung (3) verfahrbar ist, die erste Schiene (6) an zwei in z-Richtung ausgerichteten zweiten Schienen (7) verfahrbar ist, die erste Drehachse (14') des mindestens einen Aggregates (2) in z-Richtung ausgerichtet ist und das Holzelement von der x-Führung (4) senkrecht zu der von der y-z-Führung (3) festgelegten Ebene positionierbar ist.

13. Holzbearbeitungsvorrichtung (1) nach Anspruch 12, **dadurch gekennzeichnet, dass** die Führungsvorrichtung zwei y-z-Führungen (3) umfasst, von denen die in y-Richtung ausgerichteten ersten Schienen (6) vertikal versetzt an den gemeinsamen zweiten Schienen (7) angeordnet sind, so dass an einer oberen und einer unteren ersten Schiene (6) je mindestens eine Verbindungseinrichtung (5) und mit dieser jeweils ein Aggregat (2) verfahrbar ist, wobei die Aggregate (2) an der oberen ersten Schiene (6) mit nach unten vorstehenden Werkzeugköpfen (8) und die Aggregate (2) an der unteren ersten Schiene (6) mit nach oben vorstehenden Werkzeugköpfen (8) angeordnet sind, so dass eine Bearbeitung des Holzelementes von unten und oben bzw. von allen Seiten möglich ist.

14. Holzbearbeitungsvorrichtung (1) nach Anspruch 13, **dadurch gekennzeichnet, dass** mindestens vier vorzugsweise mindestens fünf Aggregate (2) an der Führungsvorrichtung angeordnet sind, wobei jedes Aggregat (2) mindestens zwei, vorzugsweise vier Wechselfutter (12) umfasst, so dass jederzeit mindestens acht, vorzugsweise aber zwanzig Werkzeuge (11) einsatzbereit sind.

## Claims

1. A woodworking device (1) for working wooden elements, comprising at least one unit (2) and a guide device, said guide device being capable of bringing the at least one unit (2) and a wooden element to be worked into a desired relative position, the at least one unit (2) comprising a connecting apparatus (5) for connection to the guide device; a tool head (8) having at least one changeable chuck (12) for tools (11) or tool holders; a drive device for driving the at least one changeable chuck (12); and, between the connecting apparatus (5) and the tool head (8), a first and a second rotary device (14, 21) near the connecting apparatus (5) and near the tool head (8), respectively, said rotary devices being for rotary movements about a first and second axis (14', 21'), respectively, the first and the second axis (14', 21') of rotation being aligned perpendicular to one another, the first rotary device (14) comprising a first rotary drive (15), the second rotary device (21) comprising a second rotary drive (23), the two rotary devices (14, 21) making it possible to achieve rotations of the tool head (8) about two axes perpendicular to one another, **characterized in that** the drive apparatus comprises a drive motor (26) arranged on the connecting apparatus (5) and comprises a drive transmission from the drive motor (26) to the at least one changeable chuck (12) of the tool head (8), the drive transmission comprising a first and a second shaft portion (27, 28) for the first and the second rotary devices (14, 21), respectively, said first and second shaft portions being arranged centered on the first and the second axis (14', 21') of rotation, respectively, the drive transmission comprising, at the end of the second shaft portion (28) opposite from the tool head (8), a gear unit having gears, preferably two intermeshing bevel gears (29a, 29b).

2. The woodworking device (1) according to Claim 1, **characterized in that** a central portion of the drive transmission is arranged between the two rotary devices (14, 21) at a distance from the first axis (14') of rotation, preferably so as to extend in parallel therewith, the drive transmission comprising, from the first shaft portion (27) to the central portion of the drive transmission, a transmission apparatus radial to the first axis (14') of rotation.

3. The woodworking device (1) according to Claim 2, **characterized in that** the radial transmission apparatus comprises a gear transmission having at least two, in particular four, gears (30) arranged in series or optionally comprises a radial shaft portion connected on both sides via gears.

4. The woodworking device (1) according to Claim 2 or 3, **characterized in that** the central portion of the drive transmission comprises a central shaft portion (29) or optionally a gear unit having gears arranged in series.

5. The woodworking device (1) according to any of Claims 2 to 4, **characterized in that** a free end face of the tool head (8) opposite from the second shaft portion (28) is at a distance of at least 50 cm to the central portion of the drive transmission.

6. The woodworking device (1) according to any of Claims 1 to 5, **characterized in that** the second shaft portion (28) drives at least one changeable chuck (12) via at least one gear unit, the at least one gear unit preferably being designed as a beveled gear unit (29c, 29d).

7. The woodworking device (1) according to Claim 6, **characterized in that** changeable chucks (12) are arranged at uniform circumferential intervals around the second shaft portion (28), the axes of said changeable chucks preferably extending perpendicular to the second shaft portion (28), with at least two, preferably four, optionally six, changeable chucks (12) being arranged.

8. The woodworking device (1) according to Claim 7, **characterized in that** the region of the second shaft portion (28) in which the changeable chucks (12) are arranged around said shaft portion is arranged in the region of the first axis (14') of rotation.

9. The woodworking device (1) according to any of Claims 1 to 8, **characterized in that** the first rotary device (14) comprises a first rotary bearing (14a) arranged between the connecting part (5) and a central unit portion (17) and comprises a first rotary drive (15) arranged on the connecting part (5), and the second rotary device (21) comprises a second rotary bearing (22) arranged between the central unit portion (17) and the tool head (8) and comprises a second rotary drive (23) arranged on the central unit portion (17), the first and the second rotary drive (15, 23) making it possible, by means of associated first and second alignment transmissions, respectively, to adjust the desired relative alignments of the parts arranged on both sides of the particular rotary bearing (14a, 22).

10. The woodworking device (1) according to Claim 9, **characterized in that** the first rotary drive (15) is arranged in the connecting apparatus (5), and the first alignment transmission is designed as a gear unit, preferably as a worm gear, the worm being arranged on a first rotary drive, the worm gear being arranged on the first shaft portion.

11. The woodworking device (1) according to Claim 9 or 10, **characterized in that** the second rotary drive (23) is arranged in the half of the central unit portion (17) facing the first rotary bearing (14a), preferably in a region having the first axis (14') of rotation, and the second alignment transmission extends over at least half the length of the central unit portion (17) and is designed as a form-fitting gear unit preferably having at least three, but in particular five, alignment gears (25), the meshing between the alignment gears (25) being adjustable in a non-slip manner.

12. The woodworking device (1) according to any of Claims 1 to 11, **characterized in that** the guide device comprises at least one y/z guide (3) for at least one connecting apparatus (5) and one x-guide (4) for a wooden element to be worked, the at least one connecting apparatus (5) being moveable on a first rail (6) of the at least one y/z guide (3), said first rail being aligned in the y-direction, the first rail (6) being moveable on two second rails (7) aligned in the z-direction, the first axis (14') of rotation of the at least one unit (2) being aligned in the z-direction, the wooden element being able to be positioned by the x-guide (4) perpendicularly to the plane defined by the y/z guide (3).

13. The woodworking device (1) according to Claim 12, **characterized in that** the guide device comprises two y/z guides (3), from which the first rails (6) aligned in the y-direction are arranged vertically offset on the shared second rails (7) such that at least one connecting apparatus (5) is moveable on both an upper and a lower first rail (6) and such that a unit (2) is moveable by each of said connecting devices, the units (2) on the upper first rail (6) being arranged with downwardly projecting tool heads (8), the units (2) on the lower first rail (6) being arranged with upwardly projecting tool heads (8) such that it is possible to work the wooden element from below and above or from all sides.

14. The woodworking device (1) according to Claim 13, **characterized in that** at least four, preferably at least five, units (2) are arranged on the guide device, each unit (2) comprising at least two, preferably four, changeable chucks (12) such that at least eight, but preferably twenty, tools (11) are ready for use at any one time.

## Revendications

1. Dispositif à travailler le bois (1) pour le travail d'éléments en bois comprenant au moins un agrégat (2) et un moyen de guidage, lequel moyen de guidage permet d'amener l'au moins un agrégat (2) et un élément en bois à travailler dans une position relative souhaitée, dans lequel l'au moins un agrégat (2) comprend un appareil de liaison (5) vers le moyen de guidage, une tête d'outil (8) avec au moins un mandrin interchangeable (12) pour des outils (11) ou des porte-outils, un moyen d'entraînement destiné à entraîner l'au moins un mandrin interchangeable (12) et, entre l'appareil de liaison (5) et la tête d'outil (8), un premier moyen de rotation (14) dans l'appareil de liaison (5) et un second moyen de rotation (21) dans la tête d'outil (8) pour des mouvements de rotation autour d'un premier respectivement d'un second axe de rotation (14', 21'), dans lequel le premier et le second axe de rotation (14', 21') sont orientés perpendiculairement l'un par rapport à l'autre, le premier moyen de rotation (14) comprend un premier entraînement en rotation (15), le second moyen de rotation (21) comprend un second entraînement en rotation (23) et les deux moyens de rotation (14, 21) permettent d'obtenir des rotations de la tête d'outil (8) autour de deux axes perpendiculaires l'un à l'autre, **caractérisé en ce que** le moyen d'entraînement comprend un moteur d'entraînement (26) disposé sur l'appareil de liaison (5) et une transmission d'entraînement depuis le moteur d'entraînement (26) vers au moins un mandrin interchangeable (12) de la tête d'outil (8), dans lequel la transmission d'entraînement comprend, dans le premier et le second moyen de rotation (14, 21), à chaque fois une première respectivement seconde section d'arbre (27, 28) disposée de manière centrée sur le premier respectivement second axe de rotation (14', 21') et, à l'extrémité de la seconde section d'arbre (28) opposée à la tête d'outil (8), un engrenage avec des roues dentées, de préférence avec deux roues coniques (29a, 29b) qui s'engrènent.

2. Dispositif à travailler le bois (1) selon la revendication 1, **caractérisé en ce que** entre les deux moyens de rotation (14, 21) une section médiane de la transmission d'entraînement est disposée à une distance du premier axe de rotation (14'), s'étendant de préférence parallèlement à celui-ci, dans lequel la transmission d'entraînement comprend, depuis la première section d'arbre (27) vers la section médiane de la transmission d'entraînement, un appareil de transmission radiale vers le premier axe de rotation (14').

3. Dispositif à travailler le bois (1) selon la revendication 2, **caractérisé en ce que** l'appareil de transmission radiale comprend une transmission d'engrenage avec au moins deux, mais en particulier avec quatre, roues dentées (30) disposées en série ou, le cas échéant, une section d'arbre radiale raccordée des deux côtés par des roues dentées.

4. Dispositif à travailler le bois (1) selon la revendication 2 ou 3, **caractérisé en ce que** la section médiane de la transmission d'entraînement comprend une section d'arbre médiane (29) ou le cas échéant un engrenage avec des roues dentées disposées en série.

5. Dispositif à travailler le bois (1) selon l'une des revendications 2 à 4, **caractérisé en ce qu'**une surface frontale libre de la tête d'outil (8) opposée à la seconde section d'arbre (28) est située à une distance d'au moins 50 cm de la section médiane de la transmission d'entraînement.

6. Dispositif à travailler le bois (1) selon l'une des revendications 1 à 5, **caractérisé en ce que** la seconde section d'arbre (28) entraîne par le biais d'au moins un engrenage au moins un mandrin interchangeable (12), dans lequel l'au moins un engrenage est de préférence réalisé sous la forme d'un engrenage à roues coniques (29c, 29d).

7. Dispositif à travailler le bois (1) selon la revendication 6, **caractérisé en ce que**, à des distances périphériques régulières autour de la seconde section d'arbre (28), sont disposés des mandrins interchangeables (12) dont les axes s'étendent de préférence perpendiculairement à la seconde section d'arbre (28), dans lequel au moins deux, de préférence quatre et le cas échéant six, mandrins interchangeables (12) sont disposés.

8. Dispositif à travailler le bois (1) selon la revendication 7, **caractérisé en ce que** la zone de la seconde section d'arbre (28), où les mandrins interchangeables (12) sont disposés autour de celle-ci, est disposée au niveau du premier axe de rotation (14').

9. Dispositif à travailler le bois (1) selon l'une des revendications 1 à 8, **caractérisé en ce que** le premier moyen de rotation (14) comprend un premier palier de rotation (14a) disposé entre l'élément de liaison (5) et une section d'agrégat médiane (17) ainsi qu'un premier entraînement en rotation (15) disposé sur l'élément de liaison (5), et le second moyen de rotation (21) comprend un second palier de rotation (22) disposé entre la section d'agrégat médiane (17) et la tête d'outil (8) ainsi qu'un second entraînement en rotation (23) disposé sur la section d'agrégat médiane (17), dans lequel le premier et le second entraînement en rotation (15, 23) permettent chacun de régler, par le biais d'une première respectivement seconde transmission d'orientation associée, les orientations relatives souhaitées des éléments disposés des deux côtés des paliers de rotation (14a, 22) respectifs.

10. Dispositif à travailler le bois (1) selon la revendication 9, **caractérisé en ce que** le premier entraînement en rotation (15) est disposé dans l'appareil de liaison (5) et la première transmission d'orientation est réalisée sous la forme d'un engrenage, de préférence sous la forme d'un engrenage à vis sans fin, dans lequel la vis sans fin est disposée sur le premier entraînement en rotation et la roue hélicoïdale sur la première section d'arbre.

11. Dispositif à travailler le bois (1) selon la revendication 9 ou 10, **caractérisé en ce que** le second entraînement en rotation (23) est disposé dans la moitié de la section d'agrégat médiane (17) opposée au premier palier de rotation (14a), de préférence dans une zone avec le premier axe de rotation (14'), la seconde transmission d'orientation s'étendant sur au moins la demi-longueur de la seconde section d'agrégat (17) et étant réalisée sous la forme d'un engrenage par complémentarité de forme de préférence avec au moins trois, mais en particulier avec cinq, roues dentées d'orientation (25), dans lequel les engrènements entre les roues dentées d'orientation (25) peuvent être réglées sans glissement.

12. Dispositif à travailler le bois (1) selon l'une des revendications 1 à 11, **caractérisé en ce que** le moyen de guidage comprend au moins un guidage y-z (3) pour au moins un appareil de liaison (5) et un guidage x (4) pour un élément en bois à travailler, dans lequel l'au moins un appareil de liaison (5) peut être déplacé sur un premier rail (6) de l'au moins un guidage y-z (3) orienté dans la direction y, le premier rail (6) peut être déplacé sur deux seconds rails (7) orientés dans la direction z, le premier axe de rotation (14') de l'au moins un agrégat (2) est orienté dans la direction z et l'élément en bois peut être positionné par le guidage x (4) perpendiculairement au plan défini par le guidage y-z (3).

13. Dispositif à travailler le bois (1) selon la revendication 12, **caractérisé en ce que** le moyen de guidage comprend deux guidages y-z (3), depuis lesquels les premiers rails (6) orientés dans la direction y sont disposés de manière décalée verticalement sur les seconds rails conjoints (7) de telle sorte que, sur un premier rail supérieur et un premier rail inférieur (6), peut être déplacé à chaque fois au moins un appareil de liaison (5) et avec celui-ci un agrégat (2) respectif, dans lequel les agrégats (2) sont disposés sur le premier rail supérieur (6) avec des têtes d'outil (8) en saillie vers le bas et les agrégats (2) sont disposés sur le premier rail inférieur (6) avec des têtes d'outil en saillie vers le haut (8) de telle sorte qu'un travail de l'élément en bois soit possible depuis le bas et le haut, respectivement de tous les côtés.

14. Dispositif à travailler le bois (1) selon la revendication 13, **caractérisé en ce qu'**au moins quatre, de préférence au moins cinq, agrégats (2) sont disposés sur le moyen de guidage, chaque agrégat (2) comprenant au moins deux, de préférence quatre, mandrins interchangeables (12) de telle sorte qu'à chaque fois au moins huit, mais de préférence vingt, outils (11) sont prêts à être utilisés.
